Europäisches Patentamt

European Patent Office

Office européen des brevets

(11) Publication number:
0 279 152
A1

## (12) EUROPEAN PATENT APPLICATION

(21) Application number: 87850395.2

(22) Date of filing: 22.12.87

(51) Int. Cl.⁴: F15B 1/02 , F04B 49/08 , F16H 39/46

Die Bezeichnung der Erfindung wurde geändert (Richtlinien für die Prüfung im EPA, A-III, 7.3).

(30) Priority: 22.12.86 SE 8605520

(43) Date of publication of application:
24.08.88 Bulletin 88/34

(84) Designated Contracting States:
AT BE CH DE ES FR GB IT LI LU NL SE

(71) Applicant: Akermans Verkstad AB
Bruksgatan 5 Box 115
S-241 00 Eslöv(SE)

(72) Inventor: Olofsson, Bertil
Eneborgsvägen 8
S-241 00 Eslöv(SE)

(74) Representative: Rostovanyi, Peter et al
AWAPATENT AB Box 5117
S-200 71 Malmö(SE)

(54) Method and device for controlling the hydraulic system of an excavator.

(57) A method and a device for centrolling, during slow acceleration of the working movement of a hydraulic cylinder and/or motor, a flow delivered under pressure from a pump system (100), especially an adjustable pump with a combined constant power and constant pressure control, so as to obtain a practically loss-free acceleration in that no excess flow is supplied to the working cylinder or working cylinder or motor.

This is achieved during the acceleration process by operating in different ways, either only the pressure control level of the pump system (100) by setting means (702), or simultaneously also the setting of the beginning of the power control of the pump system (100) by setting means (701).

Said setting means (701, 702) consist e.g. of a piston and cylinder assembly or a proportional magnet the force of which generally acts on a preloaded adjustment spring.

The setting of the pressure control level or the beginning of the power control during the acceleration of the working movement of a hydraulic motor (251) is brought about, e.g. by having the servo (pilot) pressure (control signal) from the remote control system (300) by means of which the hydraulic motor is operated to directly act on both ore one of the setting means (701, 702).

Fig. 21

# METHOD AND DEVICE FOR A CONSTRUCTION MACHINE

The present invention relates to a method and a device of the type stated in the preambles of the claims.

A construction machine generally includes a number of pressure medium-operated cylinders and motors (pneumatic/hydraulic).

Especially a hydraulic excavator generally has hydraulic cylinders e.g. for the boom, dipper arm and bucket movements of the digging equipment, and for dozer blade movement, as well as hydraulic motors for slewing and propulsion. Generally, the supply of pressure medium from the pressure source to the respective cylinder or motor is controlled by a remote control system the servo (pilot) pressure of which actuates the main valves of the respective cylinder or motor. During an acceleration process by means of said cylinders or motors, a lower working pressure arises, when a gentle start of the movement is desired, than at maximum acceleration concurrently as a small available flow from the pump is used. This gives rise to unnecessary power losses.

The object of the present invention is to overcome the above-mentioned drawbacks. According to the invention, this object is achieved by the method defined in more detail in the characterizing clauses of the claims.

The invention also relates to a device of the type recited in the preambles of the claims. The device has the features stated in the characterizing clauses of the claims.

The invention will now be described in more detail with reference to the accompanying drawings showing embodiments thereof.

Fig. 1 shows a conventional device for driving and controlling a hydraulic motor, and Fig. 2 shows a similar device for a corresponding hydraulic cylinder. Figs. 3 and 4 show pump characteristics for a commonly used constant power control pump, and Fig. 5 relates to a constant pressure control pump. Figs. 6, 7, 8, 9, 10 and 11 schematically show relationships between working pressure and flow to a power consumer (cylinder/motor) during an acceleration process.

Figs. 12, 19, 20, 21, 22, 23, 24 and 28 show different embodiments of the invention.

Figs. 13, 14, 15, 16, 17, 18, 25, 26 and 27 show different part embodiments of the invention.

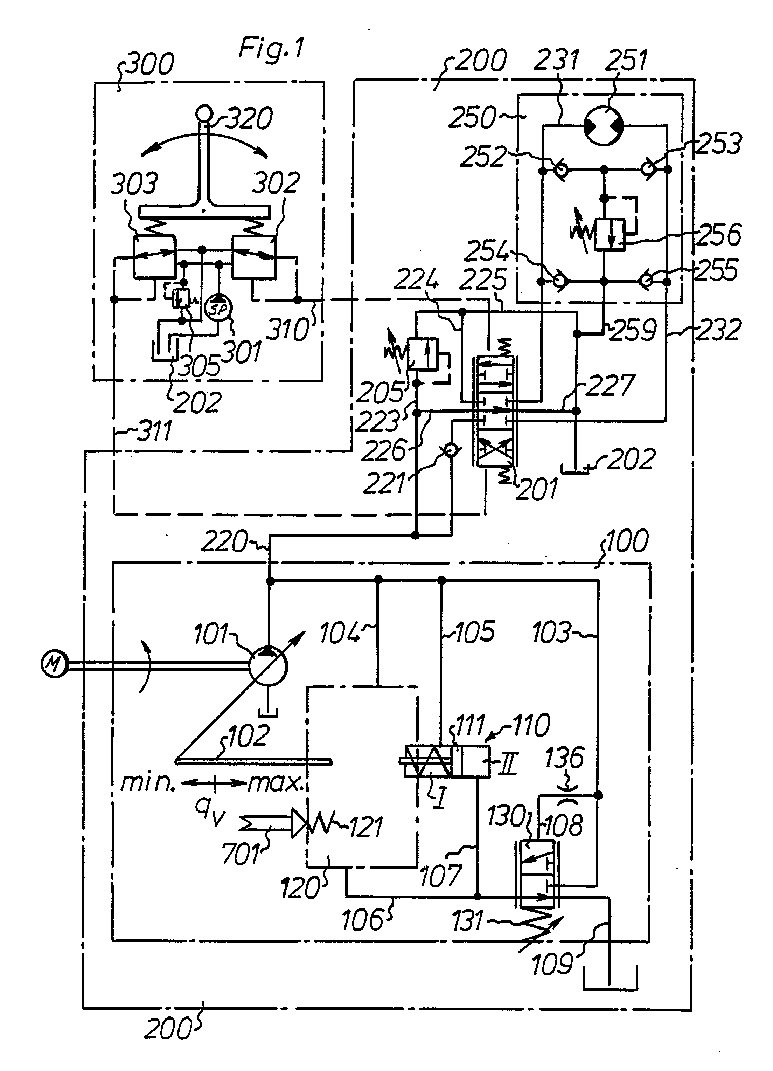

A commonly used device for driving and controlling a hydraulic motor, especially for slewing the superstructure of an excavator, is shown in Fig. 1.

The device comprises a hydraulic variable-displacement pump 101 included in a pump system 100 and powered by a motor M, a hydraulic motor system 250 comprising a hydraulic motor 251 with non-return valves 252, 253, 254, 255, a pressure relief valve 256, a hydraulic flow line 259, and hydraulic flow lines 231, 232 connected to a main valve 201, a remote control system 300 consisting of a manually operable control lever 320 actuating pressure control valves 302, 303 for pressurizing the pilot control lines 310 and 311, and an associated servo (pilot) pump 301 and a pressure relief valve 305, a working pump line 220 with an associated pressure relief valve 205 and associated branch lines 223, 224 to a main valve 201, center bypass lines 226, 227, a return line 225 and a tank 202.

In the illustrated hydraulic system, the pump system 100 and the hydraulic lines of the hydraulic working system 200 are indicated by full lines while the pilot control lines of the remote control system, by means of which the main valve 201 and thus the hydraulic working system are actuated, are shown by broken lines.

The hydraulic motor 259 is run in one or the other direction by pressure medium supply and drainage, respectively, via the lines 231 and 232 connected to the main valve 201. As illustrated, the spool of the main valve is in a neutral, central position and, by displacement wholly or partly in one or the other direction, can connect the lines 231, 232 to the pump or the tank. The displacement of the spool of the main valve 201 is effected by means of a servo system which is connected to the main valve 201 by the pilot flow lines 310 and 311. The line 310 is connected to the pressure control valve 302 while the line 311 is connected to the pressure control valve 303. The pressure control valves are supplied with a constant pressure from a servo (pilot) pump 301. It appears from the Figure that by manually operating the control lever 320, it is possible to provide a pilot control pressure $p_{servo}$, of a value depending on the lever movement, in the pilot lines 310, 311 to the main valve 201 for achieving a varying displacement of the valve spool in one or the other direction. The amount of flow to the hydraulic motor 251 depends on the magnitude of the displacement, so that the rotational speed of the output shaft of the motor can be varied. The arrangement now described is fully conventional. In order to have the hydraulic motor 251 rotate a certain predetermined mass, especially slew the superstructure of an excavator, at the desired speed, the spool of the main valve 201 is operated by means of the control lever 320 in order to obtain a corresponding oil flow $q_v$ to the hydraulic motor 251.

The working pressure required for slewing depends on the required moment for accelerating the movement and on prevailing frictional losses. The working pressure and, thus, the acceleration can be varied by means of different positions of the spool in the main valve 201. The acceleration process requires less flow $q_v$ to the hydraulic motor 251 at the beginning of the acceleration than at the end thereof.

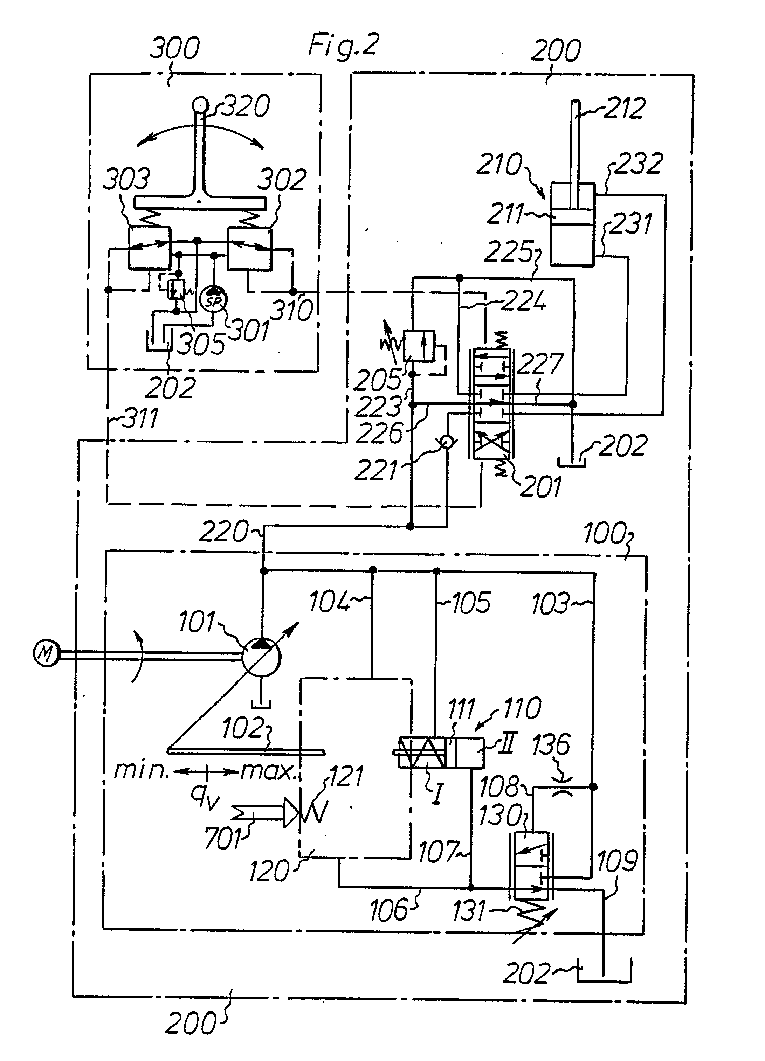

As will of course be readily appreciated by a person skilled in the art, that described above with reference to Fig. 1 regarding the hydraulic motor system 250 with the hydraulic motor 251 also applies to a conventional piston and cylinder assembly 210 with lines 231, 232 connected to the main valve 201, as shown in Fig. 2. That described hereinafter and exemplified by the hydraulic motor 251 in the hydraulic motor system 250 of course also applies to a corresponding piston and cylinder assembly 210.

The pump system 100 of the invention as illustrated in Figs. 1 and 2 comprises a variable-displacement pump 101 and an associated control system for achieving suitable pump characteristics.

The pump system here consists of the pump 101, adjusting means 102, a piston and cylinder assembly 110, 111, a throttle valve 136, a valve 130, a manually preloadable spring 131, a regulator unit 120 with setting means 701 and associated lines 103, 104, 105, 106, 107, 108, 109.

Different pump characteristics are obtained depending on the type of the control unit 120.

Generally, the unit 120 consists of a hydraulic-mechanical device actuating the adjusting means 102.

The unit 120 may also comprise electromechanical or electrohydraulic-mechanical devices which, by acting on the adjusting means 102 or other means, set the displacement of the pump 101. In addition to manual presetting, it is also possible to use electric or hydraulic control signals applied to the control unit 120. This is exemplified in the pump system 100 by a setting means 701 acting on the unit 120, as represented by an arrow. For example, the setting means 701 normally consists of a manually operable screw device or of an electric input signal applied to a proportional magnet unit affecting the preload of a spring 121.

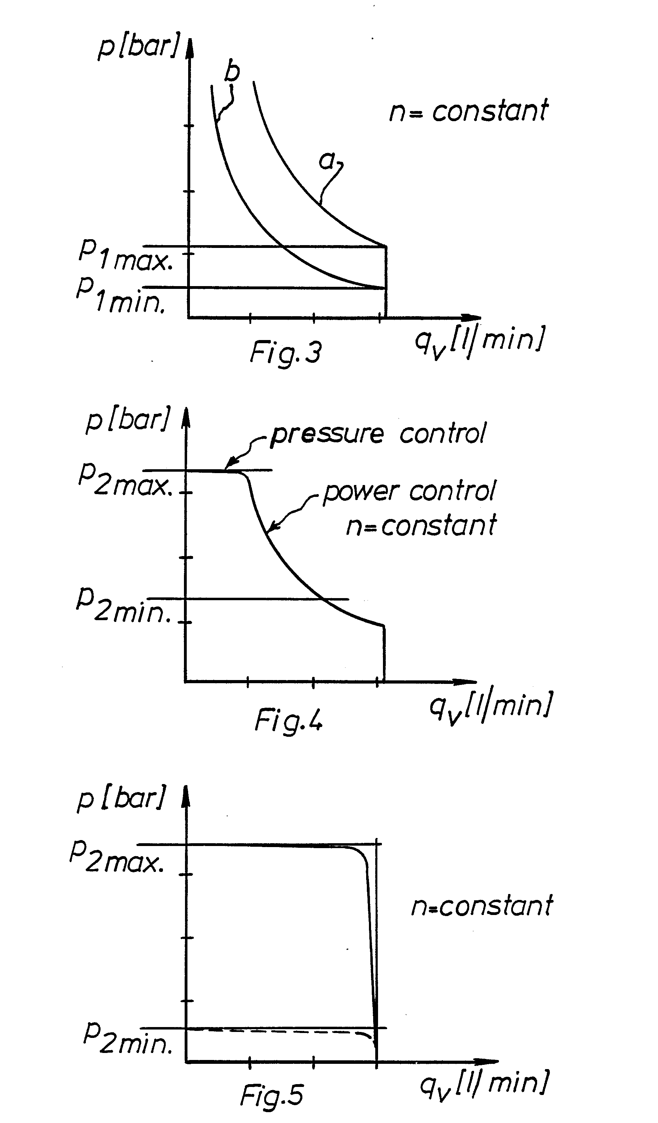

The very build-up or disposition of the regulator unit 120 may here be disregarded since it is no part of the invention. For examples of pump characteristics in connection with constant power control (the product of working pressure and displacement is maintained constant), see schematic relation between working pressure p and flow $q_v$ for an assumed constant pump speed n in Fig. 3.

The control is carried out in the following way. Over a preset pressure $p_1$ (beginning of the power control), the flow is controlled in relation to the working pressure p, such that the product of the flow $q_v$ and the working pressure p in practice becomes almost constant. At a working pressure below the preset pressure $p_1$, the pump operates with constant maximum displacement. The pressure $p_1$ is generally preset by manually preloading a spring 121 by means of a set screw in the pump. This adjustment and, thus, adjustment of the beginning of the power control $p_1$ may also be carried out by electric or hydraulic action.

If the pump system 100 has a valve 130 connected to the hydraulic circuit of the pump system 100, the valve 130 is caused, depending on the preload of the valve spring 131, to connect both sides I and II of the adjusting piston 111 to the working pressure line 103. This results in a pressure control and thus cut-off (limitation) of the constant power control curve according to Fig. 3 at the pressure $p_2$ according to Fig. 4. A pressure limitation (pressure cut-off) is thus obtained when, according to the constant power control curve, the working pressure produced by the pump reaches a predetermined working pressure $p_2$, which is maintained almost constant. The pressure control level $p_2$ is generally varied in known pump systems by preloading the above-mentioned spring 131 affecting the opening pressure of the valve 130. The valve 130 is generally integrated in the pump housing of existing known pump systems 100.

If the pump system 100 has no control unit 120 with associated connections to the hydraulic lines 106 and 104, the known constant pressure control pump having the pump characteristics as - schematically shown in Fig. 5 is provided by means of the valve 130. The valve is generally integrated with the pump housing of the pump system 100.

In the illustrated pump system 100, the adjusting piston 111 may alternatively be actuated by pressure medium from a proportional valve (or valves) included in an electric or electrohydraulic control circuit the input signals of which consist e.g. of signals corresponding to the working pressure of the pump 101 and the desired pressure control level $p_2$. Thus, the setting of the pressure control level can be effected in a manner other than that shown in the pump system 100 now described. The manner in which the control of the desired or set pressure control level $p_2$ and, thus, the change of the displacement of the pump 101 are obtained may here be disregarded, since it is no part of the invention. The sole feature of interest here is the setting means by which the the pressure control level of the pump system 100 and the beginning of the power control can be changed. The setting means can then be supplied with manual, electric, pneumatic or hydraulic signals required for effecting the change. Alternatively, the pump system 100 may be equipped with a control circuit/ control unit, whereby the above-mentioned setting signals (pressure level setting signals) are directly applied to this control circuit/control unit.

The invented device has means for temporarily and automatically affecting the pressure control level $p_2$ of the pump system 100. One example of a pump system 100 used in the invention consists of a variable-displacement pump (adjustable pump) provided with a constant pressure control or a combined constant pressure and constant power control. In this specification, these pumps are referred to as pressure control pump or combined pressure and power control pump.

For pressure control, the flow is so regulated that the pressure is maintained constant at a preset value. Below the preset pressure, the pump operates with a constant displacement, see Fig. 5. The maximum pressure $p_2$ of the constant pressure control pump is varied by the preload of the spring 131 of the valve 130. Thus, the power control pump consists of a pressure control pump at the pressure limiting level (pressure cut-off level) $p_2$.

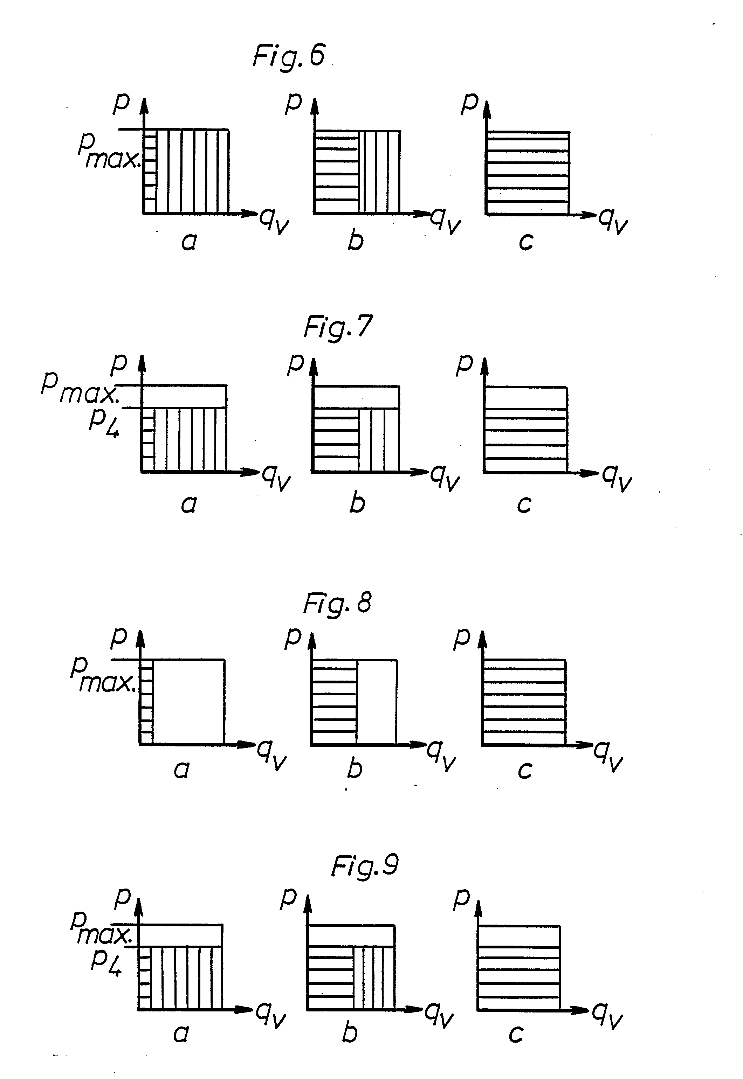

The above-mentioned drawbacks are schematically illustrated in Figs. 6, 7, 8 and 9, using two commonly existing pump systems 100. In these Figures, the pump flow $q_v$ and the working pressure p are shown at the beginning (a), the middle (b) and the end (c) of the acceleration. The horizontally sectioned areas illustrate the power used for slewing (rotation), and the vertically sectioned areas illustrate the power loss resulting from excess flow not used.

If, for example, the pump system 100 only consists of a fixed-displacement pump, a substantial part of the excess flow to the hydraulic motor 251 may, upon a major control lever movement, pass to the tank via the pressure relief valve 256. Excess flow multiplied by working pressure p here represents a power loss, see Figs. 6a, 6b and 6c.

If, when using the above-mentioned fixed-displacement pump, a slow (gentle) acceleration is brought about by a minor control lever movement, there is obtained e.g. a working pressure $p_4$. The assumed working pressure $p_4$ is of course lower than the highest possible working pressure $p_{max}$. The resulting power loss is illustrated in Fig. 7.

If the pump system 100 consists of a pressure control pump, i.e. a variable-displacement pump with constant pressure control, having a fixed, maximum pressure control level set at $p_{max}$ by e.g. the preload of the spring 131, no power losses are had upon major lever movements on account of the excess flow to the motor, since the flow is controlled by the pump system, see Fig. 8. If the same constant pressure control pump is used at a slow (gentle) acceleration brought about by a minor control lever movement, there is obtained e.g. a working pressure $p_4$. In this case, too, the working pressure $p_4$ is of course lower than the highest possible working pressure $p_{max}$. The resulting power loss is illustrated by the horizontal sectioning in Fig. 9.

As opposed to the acceleration process exemplified above in commonly existing pump systems, the invention provides an excess-free flow or so-called loss-free acceleration. This object is achieved by means being arranged, during the acceleration process, to actuate the device or devices controlling in the pump system 100 the flow produced by the pump 101. Examples of such pump systems 100 are a constant pressure control pump or a combined constant pressure and constant power control pump. The inventive device has means for controlling both the pressure control level $p_{max}$ and the beginning of the power control of the above-mentioned pump system 100, or only the pressure control level $p_{max}$ during the acceleration process.

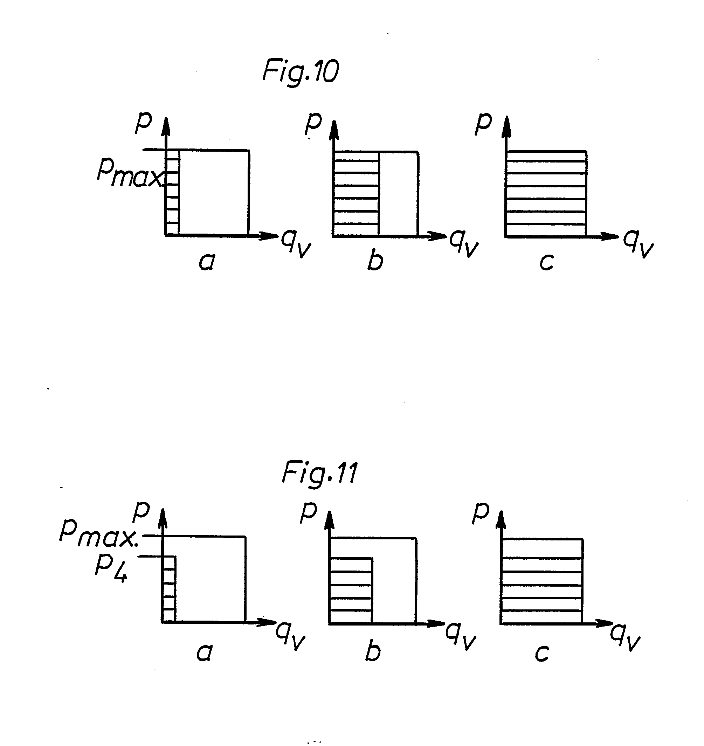

A schematic relationship between the pump flow $q_v$ and the working pressure for a pressure control pump with a variable pressure control level $p_{max}$ during an acceleration process is illustrated, as above, upon a full control lever movement according to Fig. 10 and at a slow (gentle) acceleration according to Fig. 11. There is no excess flow. The same condition applies when using a combined constant power and constant pressure control pump. When using a constant power control pump, it is also possible to further reduce the power consumption by simultaneous variable setting of the beginning of the power control by the setting means 701. Generally, the setting means is a screw or a proportional magnet, directly or indirectly preloading a spring in the control unit 120.

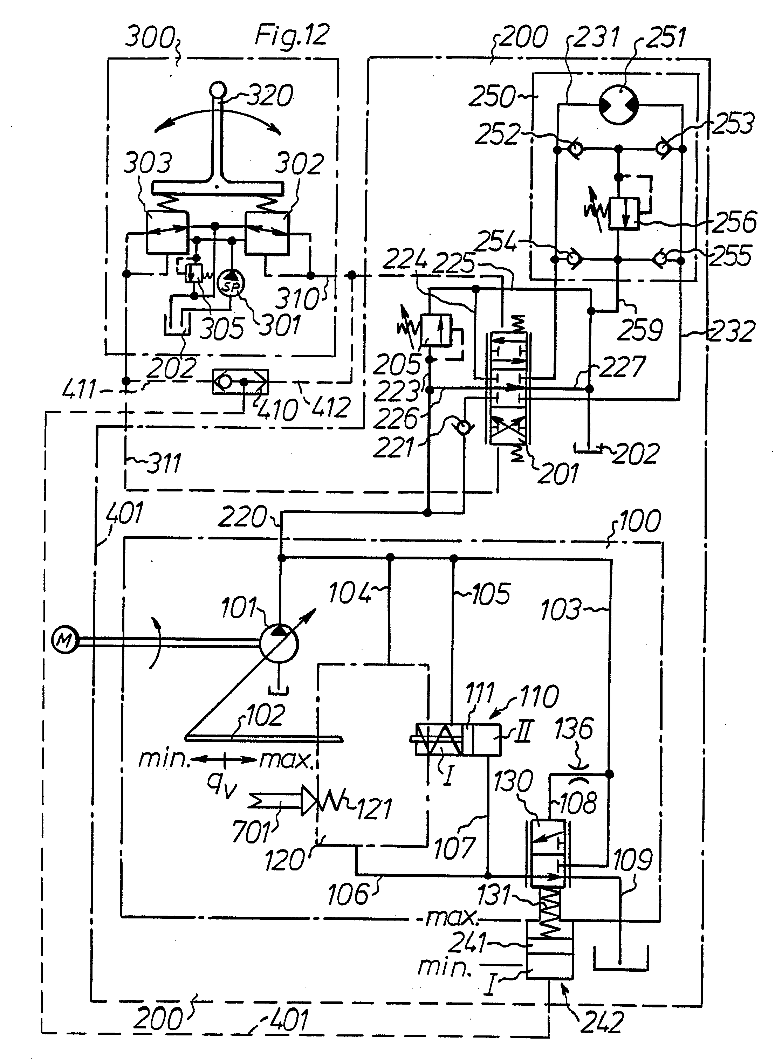

A hydraulic device, especially for slewing the superstructure of an excavator, using the above-mentioned process for controlling the pressure control level of the working pump is shown in Fig. 12. The basic construction used for slewing agrees with that of the device according to Fig. 1, except that the commonly used bypassing, used in the different embodiments, of hydraulic oil which takes place, e.g. from the pump line 220 to the tank via the lines 226, 227 and the main valve 201, is instantaneously interrupted upon a displacement of the main valve spool in one or the other direction. The novelty of the hydraulic device is that the preload of the spring 131 for setting the pressure control level $p_2$ of the pump is affected by the servo (pilot) pressure of the remote control system. The preload of the spring 131 is varied in that a piston 241 of a piston and cylinder assembly 242, whose cylinder end I is pressurized by means of the lines 411, 412 via a control line 401 and a shuttle valve 410, is connected to the pilot control lines 310, 311 of the remote control system 300, the piston 241, by the action of the control pressure, urging the spring inwards so as to achieve a spring preload suitable for the control. The piston 241 by means of which the (control) spring 131 is preloaded thus is movable between preset maximum and minimum positions, its diameter being adapted to the control valve 130, the control level and the pilot control pressure. The pressure control level of the pump can thus be continuously varied between preset maximum and minimum values in proportion to the pilot control pressure.

To facilitate the following description of the invention, reference is now made to Fig. 13a, illustrating the pump system 100, as schematically shown in Figs. 1, 2 and 12, in an even more simplified manner. The arrows 701 and 702 represent the setting means yielding the force required for providing the preload of the springs 121 and 131. The setting means 701 and 702 may consist of either a piston and cylinder assembly 242, an electromagnetic unit, a proportional magnet unit, setting means (e.g. a piston and cylinder assembly which by a lever rotates the set screw of the pump system 100 for setting the pressure control level), an electric motor which by a gear unit operates the set screw of the pump system 100 for setting the pressure control level, or a mechanical device for transmitting a mechanical or manual signal. The energy required for driving the setting means 701 and 702 is obtained via control lines 704 and 703, respectively, connected thereto. The signal which via one of the control lines 704 or 703 actuates the setting means 701 or 702 may be a pneumatic, hydraulic, electric, mechanical or manual signal. (For example, the setting means 702 with the associated control line 703 in Fig. 12 corresponds to the piston and cylinder assembly 242 with the associated hydraulic line 401.) In the case of a mechanical or manual signal, the line 703 corresponds to the linkage and/or wire cable system. In order to drive an electric device, two electric lines are generally required. Since one line, the so-called return line, is generally connected to ground, this line will be excluded in the continued description n of the invention and only the input lines will be described in the form of signal lines. Any means that may be required for amplification, if so required, of an electric signal applied to one of the setting means 701 or 702 may be regarded as part of the setting means. One example of such means is the amplifier unit (e.g. transistor amplifier) with associated power source. Thus, setting means consisting of an electro-or proportional magnet unit may consist of an electromagnet or proportional magnet with an amplifier unit and associated power source. Alternatively, the electro-or proportional magnet unit merely consists of an electro-or proportional magnet. If the setting means 701, 702, in addition to the electric signal applied via the signal line 704, 703, also requires separate power source, this may be regarded as part of the setting means. If the pump system 100 is designed in such a manner that the setting (change) of the pressure control level ($p_2$) or the beginning of the power control of the pump system can or must be effected by means of an electric signal or pressure medium signal to a signal input to the pump system especially intended therefor, the setting means 701, 702 may be considered to correspond to said signal inputs.

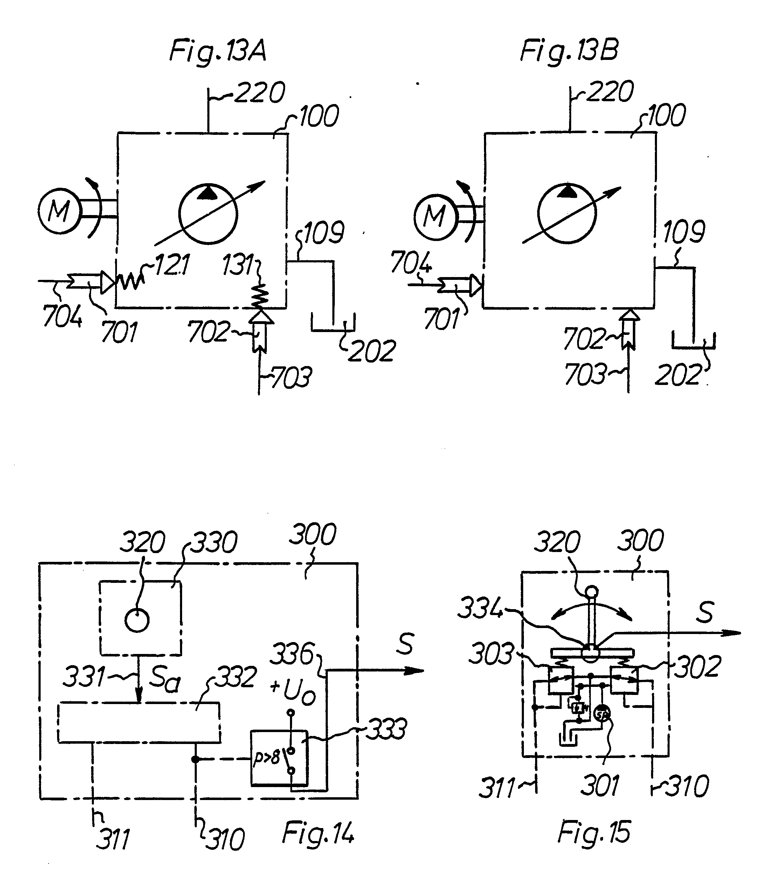

In the devices illustrated in Figs. 1, 2 and 12, only a fully hydraulic remote control system 300 has been shown, but this control system 300 may alternatively consist of an electrohydraulic control system 300. Fig. 14 shows an example of an electrohydraulic control system 300 in the form of a commonly used control system 300 consisting of an electric control lever unit 330 with a control lever 320, an electrohydraulic servo unit 332 with a servo pump 301 (not shown), and control lines corresponding to the pilot control lines 310, 311 used in the devices described above. The electric control lever unit 330 applies in a conventional manner and proportionally to the lever movement an electric control signal $S_a$ to the electrohydraulic servo unit 332 by a control line 331. Generally, the electrohydraulic servo unit 332 consists of an electric unit which applies to a proportional magnet a current corresponding to the input signal for setting a proportional valve whose output signal is a hydraulic pilot control signal $p_{servo}$ in the pilot control lines 310, 311. These hydraulic control signals consist of a hydraulic servo (pilot) pressure. Thus, as above in connection with a fully hydraulic control system, there is obtained a servo pressure (hydraulic pilot control signal) in the pilot control lines 310, 311 which is proportional to the control lever movement, for which reason the operation of the above-mentioned working cylinder 210 or hydraulic motor 251 by means of the main valve 201 takes place in the same way as in the devices described above. The value of the electric control signal $S_a$ determines which of the pilot control lines 310, 311 should be pressurized and at which control pressure. To easily distinguish which of the pilot control lines 310, 311 should be pressurized, it is possible e.g. to let the control signal $S_a$ have a zero value when the control lever is in the neutral position (i.e. no movement of the piston rod of the working cylinder), negative lever signal $S_a$ when the control lever is moved in one direction, and positive lever signal $S_a$ when the lever is moved in the opposite direction. Lever movement in one or the other direction gives e.g. corresponding inward or outward movements of the piston rod of a working cylinder 210 by pressurizing one or the other side of the main valve 201. When the electric control signal consists of both negative and positive values, the signal $S_a$ can be divided into two electric control signals, one consisting of the absolute value $(|S_a|)$ of the control signal and the other of its sign $(+/-)$. This requires two control lines between the electric control lever unit 330 and the electrohydraulic servo unit 332. Depending on the configuration of the electric circuit of the electrohydraulic servo unit, one or the other way of applying the signal $S_a$ may be preferable, but the same hydraulic output signal (control pressure) is obtained from the proportional valve used. The only feature of interest in the invention are the electric control signal $S_a$ or a corresponding signal possibly converted from this electric signal $(S_a)$, and the control signal (control pressure) in the pilot lines 310, 311. That it is possible to divide an electric signal into two signals of which one signal consists of its absolute value $(|S_a|)$ and the other signal of its sign $(+/-)$ is self-evident. To facilitate the continued description of the invention, the designation "electric control signal $S_a$" as used herein also comprises the corresponding divided signal $(S_a, +/-)$ or any other equivalent signal obtained by conversion of the control signal $S_a$. Thus, the Figures only show one electric control line for each dividable signal as above (e.g. $S_a$).

In this specification, the control signals which, directly or indirectly upon manual actuation by any pilot control unit, e.g. the control lever 320 for producing the movement of the output shaft of the hydraulic motor 251, affect the movement of the spool of the main valve 201 are termed control signal C. Examples of a control signal are the electric control signal $S_a$, the hydraulic control signal $p_{servo}$, the hydraulic control signal $p_{servo}$ converted into the corresponding electric signal, and the mechanical control signal (linkage, lever or wire cable movement) from the manual remote control system 500, or the mechanical signal converted into the corresponding electric control signal from the manual control system. The specification also uses the term "control information signal", which is designated S. In this context, "control information signal S" relates to the signal or signals from the remote control system 300 which give information on how the control is effected by means of the remote control system 300, without using the previous control signal C. The control information signal S primarily provides information on how any control means, e.g. the control lever 320 or the spool of the main valve 201, is actuated and, thus, indirectly also information on whether or not the output shaft of the piston rod of the working cylinder 210 or the hydraulic motor 251 is operated (and thus also on the direction of movement thereof). Examples of means for obtaining the control information signal S are provided by the remote control systems in Figs. 14, 15 and 16. In Fig. 14, the control information signal S is obtained by means of a pressure switch 333 or a corresponding sensor unit connected to the pilot control line 310. In this case, information (information signal $S = S_1$) is only obtained about the control lever 320 being pivoted for operation in the direction providing pilot pressure in the line 310. If it is also desirable to obtain information on operation corresponding to control lever movement in the other direction and, thus, pressurization of the line 311, an information signal $(S = S_2)$ representing such control lever movement can be obtained in the same way as in the case of control lever movement in the previous direction. The information signal S then consists of two components $S_1$ and $S_2$ which are treated in this specification as a single control information signal S. Thus, the control information signal S may here consist of one or more signal components $S_i$. In the invention, the control information signal S can also be represented by a signal produced by a sensor recording the lever movement. In Fig. 15, the sensor consists of a potentiometer 334 recording the pivotal movement of the lever about its suspension pin. Only the control information signal S emitted is shown in this Figure. Alternatively, the sensor or sensors may consist of electric switches closing or opening a current circuit upon actuation by the movement of the control lever. Here, the control information signal S consists of an electric signal having a zero value or a non-zero value. Alternatively, the information signal S may of course also be obtained from a manually activable electric switch placed on the control lever.

In the foregoing, the control signal C was obtained only in connection with electrohydraulic or fully hydraulic control systems 300, but at least the same possibilities of applying sensors (e.g. switches, potentiometers) for obtaining at least one control information signal S can be attained when using a manual remote control system, if it is disregarded that no electric control signal (e.g. $S_a$) or signal obtained from the hydraulic control pressure can be obtained when the control system is provided with neither an electric control lever or a pilot control line, e.g. 310, 311. A manual control system which is sometimes used in machines, especially excavators, is exemplified in Fig. 16. The illustrated mechanical control system 500 is assumed to act on the spool of the above-mentioned main valve 201. Such a control system most often consists of a control lever 501 whose movements, via linkage and/or wire cable systems, cause the spool of the main valve 201 to move. For example, the control information signal S can be obtained by means of a potentiometer 334 in the fulcrum of the control lever 501. Since the lever is not the only usable means in this context, the control system here provides greater possibilities of applying sensors for obtaining the control information signal S. Sensors actuated directly by the lever or indirectly by the linkage system provide an equivalent information signal S.

In the devices described above for obtaining a control signal (signals) C, both fully hydraulic, electrohydraulic and manual remote control systems have been used. For the further description of the invention, the term "remote control system" relates in particular to the previously described fully hydraulic (often termed servo systems), electrohydraulic and manual remote control systems).

In a construction machine, especially a hydraulic excavator, two hydraulic working units (cylinder/motor) are most often simultaneously operated by means of a control lever. Lever movement in a predetermined plane actuates in a conventional manner the main valve spool of one of the two hydraulic working units, and lever movement in a plane perpendicular to said plane actuates only the main valve spool of the other hydraulic working unit. Lever movements in other planes simultaneously act on both main valves. Information on the movement of the spool of each main valve or of the associated control lever is provided as earlier described where the remote control system only operated a single main valve. The only difference is that several control information signals S can be simultaneously obtained from the remote control system.

In the manual remote control system of an excavator, the manual control movements (e.g. lever movements) of the operator are generally transmitted to the spools of the main valves via linkages or the like.

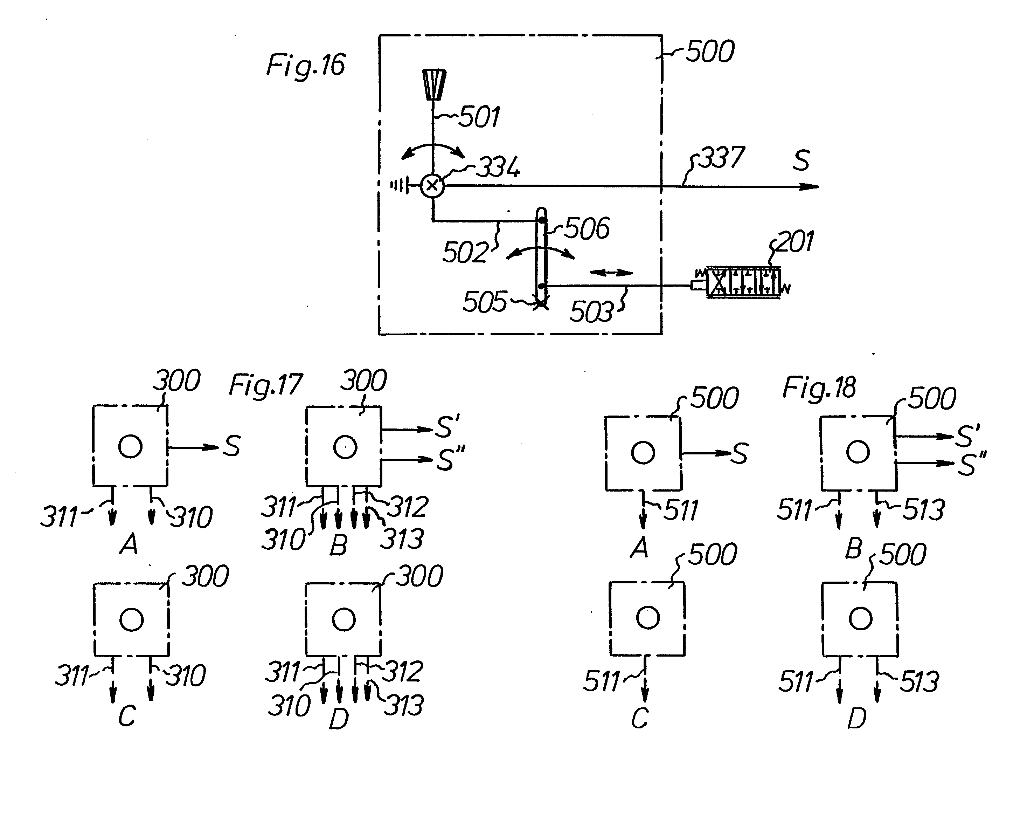

Remote control systems concerning fully hydraulic or electrohydraulic control systems are - schematically shown in Figs. 17a, b, c or d. Fig. 17a relates to a control system 300 operating a single main valve by pilot control lines 310, 311 and a control information signal S derived from the control system. Fig. 17b relates to a control system operating two main valves by control lines (hydraulic/pneumatic pressure control lines) 310, 311, 312, 313 and possible control information signals S', S" derived from the control system. (Alternatively, one or both of the signals can be used). Fig. 17c relates to a control system operating a main valve by pilot control lines 310, 311 without the emission of a control information signal. Fig. 17d relates to a control system operating two main valves by pilot control lines 310, 311, 312, 313 without the emission of a control information signal. A corresponding schematic illustration of a manual mechanical control system 500 appears from Fig. 18. Reference numerals 511, 513 in Fig. 18 designate the linkage, wire cable or the like associated with the remote control system for actuating the spool movement of the associated main valve. Thus, Figs. 18a and c relate to a control system for one main valve, while Figs. 18b and d relate to a control system operating two main valves. For the further description of the invention, the remote control system or systems used will be schematically described according to Fig. 17 or 18.

When exemplifying the control signal C and the control information signal S, the control systems (300, 500) hitherto described have been control lever-operated control systems. The examples given are of course also applicable to pedal-operated control systems. The only difference for a fully hydraulic or an electrohydraulic remote control system 300 is that the control lever 320 is replaced in a conventional manner by two pedals each correspondingly acting on the respective pressure control valve 302, 303. For a mechanical remote control system 500, the control lever device is generally replaced in a corresponding manner by a conventional pedal device. For the above-mentioned reason, the symbols used for the control systems in Figs. 17 and 18 will also comprise pedal-operated or other manual control means by which the operator controls the movement of the spool of the main valve 201.

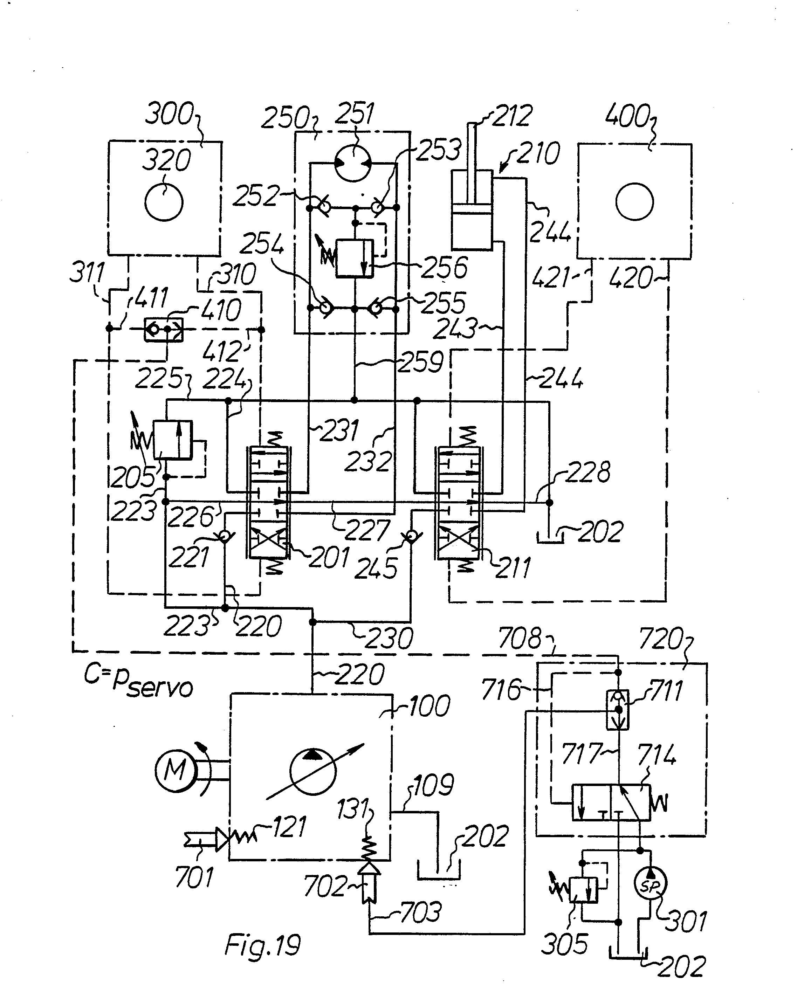

Generally, the working pump for bringing about especially slewing of the superstructure of an excavator is also used for supplying pressure medium to certain additional equipment, e.g. to ensure dozer blade movement of the excavator. In order to obtain a loss-free slewing acceleration also in this case, there is achieved, by extending the device in Fig. 12, a device as shown in Fig. 19. Thus, the setting means 702 consists of the piston and cylinder assembly 242 in Fig. 12. In Fig. 19, the traditionally designed working cylinder system for operating the working equipment consists of a working cylinder 210, a main valve 211, a non-return valve 245, hydraulic working lines 243, 244, and a remote control system 400 with pilot control lines 420, 421. (The remote control system 400 with its pilot control lines 420, 421 corresponds to the control system 300, but other reference numerals are here used to avoid confusion with the remote control system 300 of the hydraulic motor 251.) The piston rod 212 of the hydraulic cylinder 210 is caused to move in one or the other direction by supply of pressure medium and drainage, respectively, by the lines 243, 244 connected to a main valve 211. The spool in the main valve 211 is in a neutral, central position and, by being displaced wholly or partly in one or the other direction, can connect the lines 243, 244 to the tank or pump. The displacement of the spool of the main valve 211 is brought about by servo pilot pressure in the pilot control lines 420 and 421. The servo pressure is obtained in a conventional manner by means of the servo system (remote control system). In this case, the operator generally actuates the remote control system 400 by means of two pedals. Otherwise, the function and the build-up of the two control systems are similar.

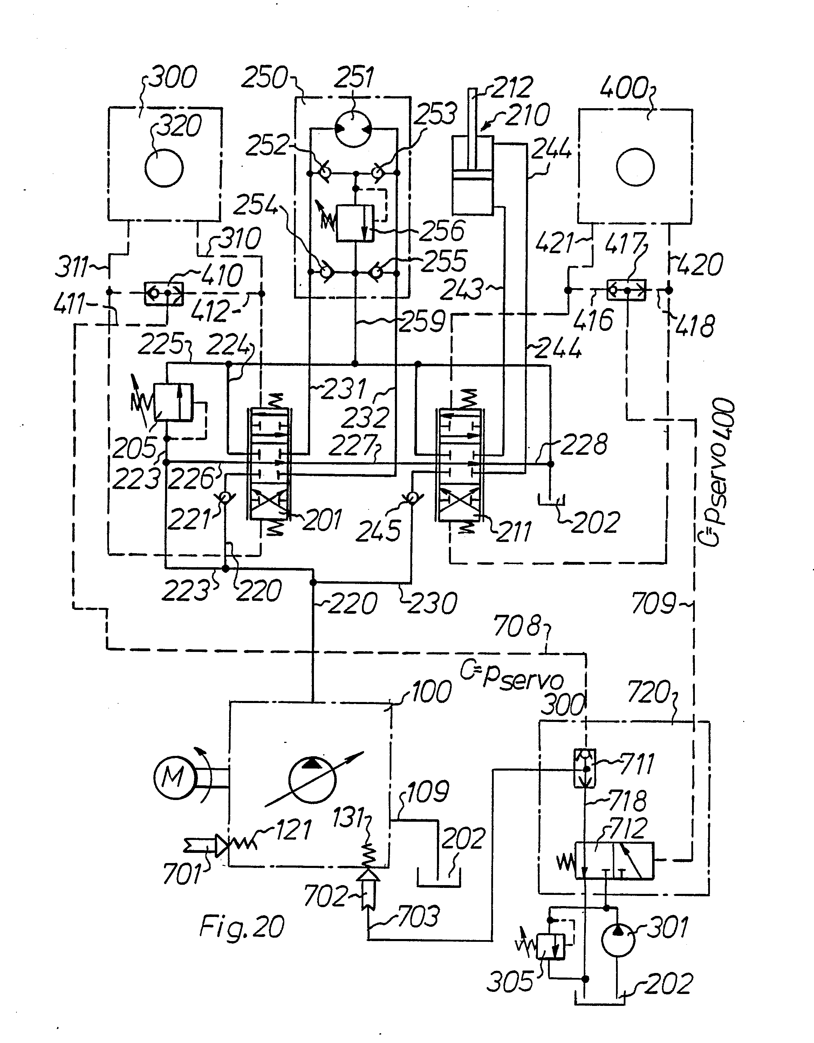

In the device according to Fig. 19, a switching unit 720 is also inserted in the signal path of the pilot pressure (control signal) from the shuttle valve 410 to the setting means 702 in order, when operating the hydraulic motor 251, to obtain the function of the device shown in Fig. 12. In Fig. 19, the switching unit consists of a shuttle valve 711, a valve 714 and lines 716, 717. By means of the valve 714, the line 717 can be connected to the tank or the servo pump (or other pressure medium source). The line 717 is connected to the shuttle valve 711 which is also connected to the (control) lines 703, 708. When the control lever 320 is in its neutral position, the pump servo pressure from the servo pump 301 is connected according to Fig. 19, to the setting means 702, the spring 131 is maximally preloaded for achieving the maximum pressure control level of the pump. In this manner, the speed of the working cylinder 210 can be regulated in a conventional manner. When operating the hydraulic motor 251, the valve 714 switches the line 717 to the tank when the pressure in the line 716 amounts to about 8 bar (minimum value of pilot pressure used), whereby the control pressure in the line 708 is caused, via the shuttle valve 711, to act on the piston 241 (not shown) of the setting means 702. The same result is achieved with the corresponding alternative embodiment according to Fig. 20, where the switching of the valve 712 is brought about by the pilot pressure for operating the working cylinder 210. In the continued description of the invention, the shuttle valves 410, 417 connected to the pilot control lines 310, 311 and 420, 421, respectively, as illustrated in Figs. 12, 19 and 20, are regarded as belonging to the respective remote control system 300, 400, since the pilot control lines belong to the respective control system. The control lines 401, 708, 709 connected to the respective shuttle valve 410, 417, as illustrated in Figs. 12, 19 and 20, correspond hereinafter to pilot control lines from the respective remote control system.

The above-mentioned devices with a hydraulic motor and at least one hydraulic cylinder using a common pump system 100 are of course not restricted only to the field of use described above but can be used in all cases where a loss-free acceleration is desired from a hydraulic motor or a hydraulic cylinder.

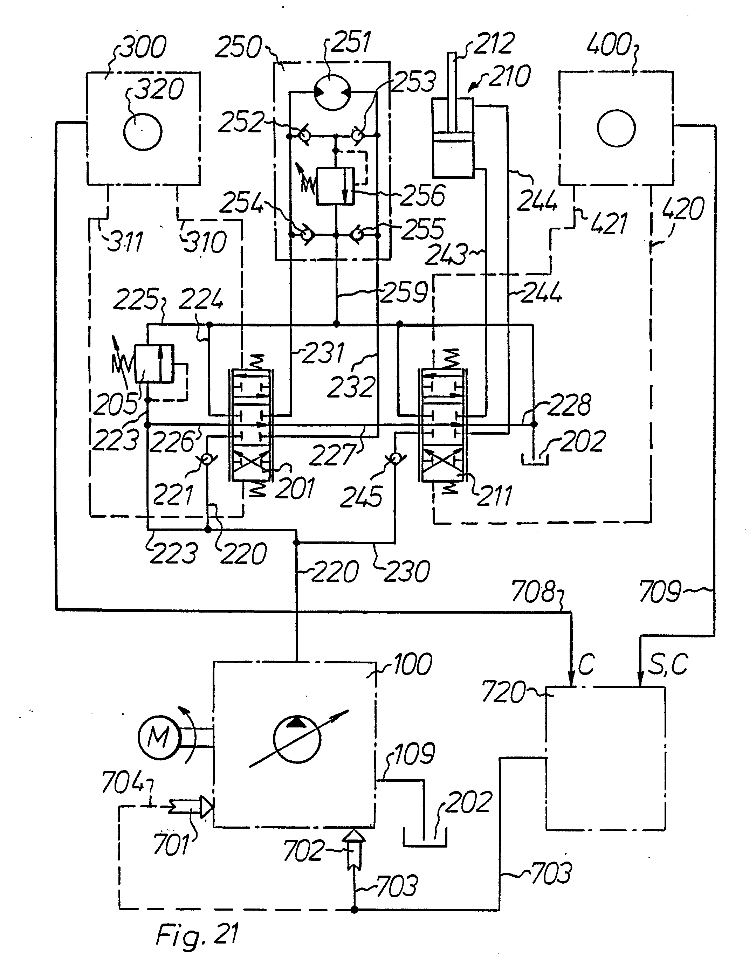

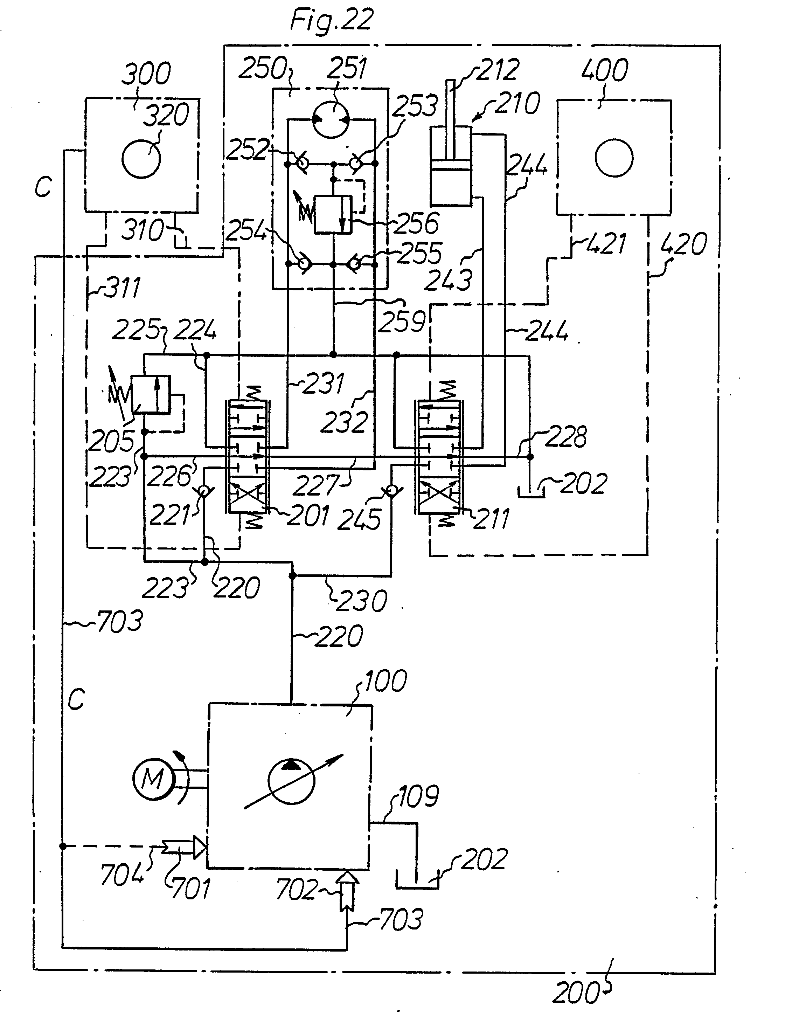

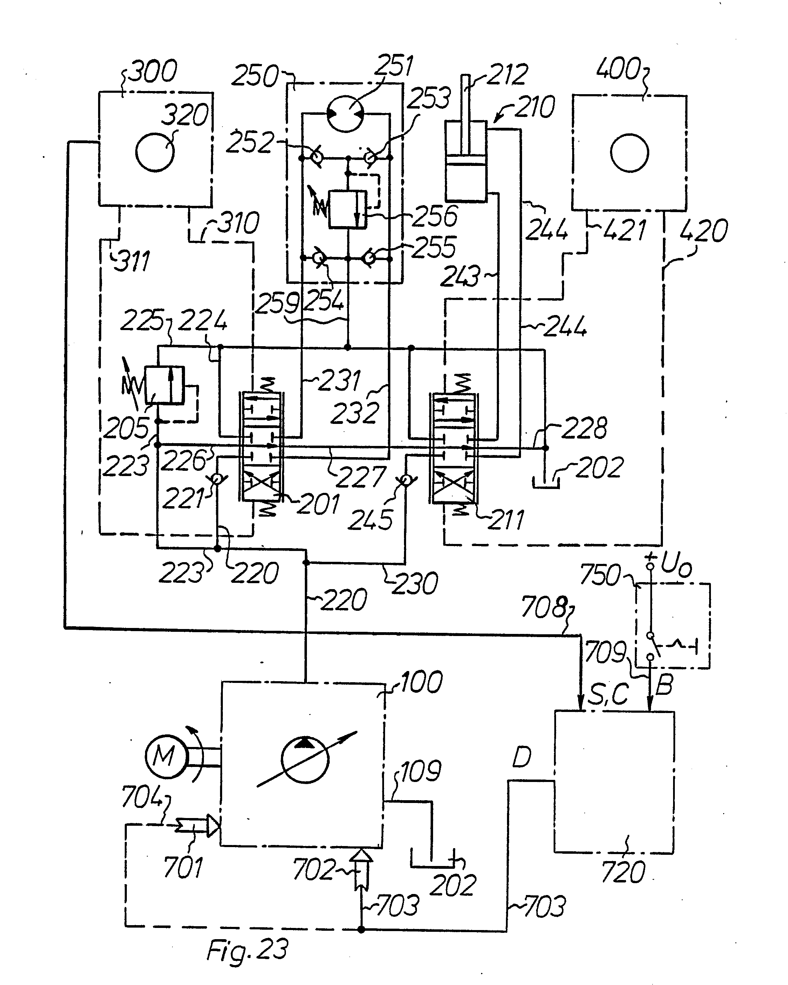

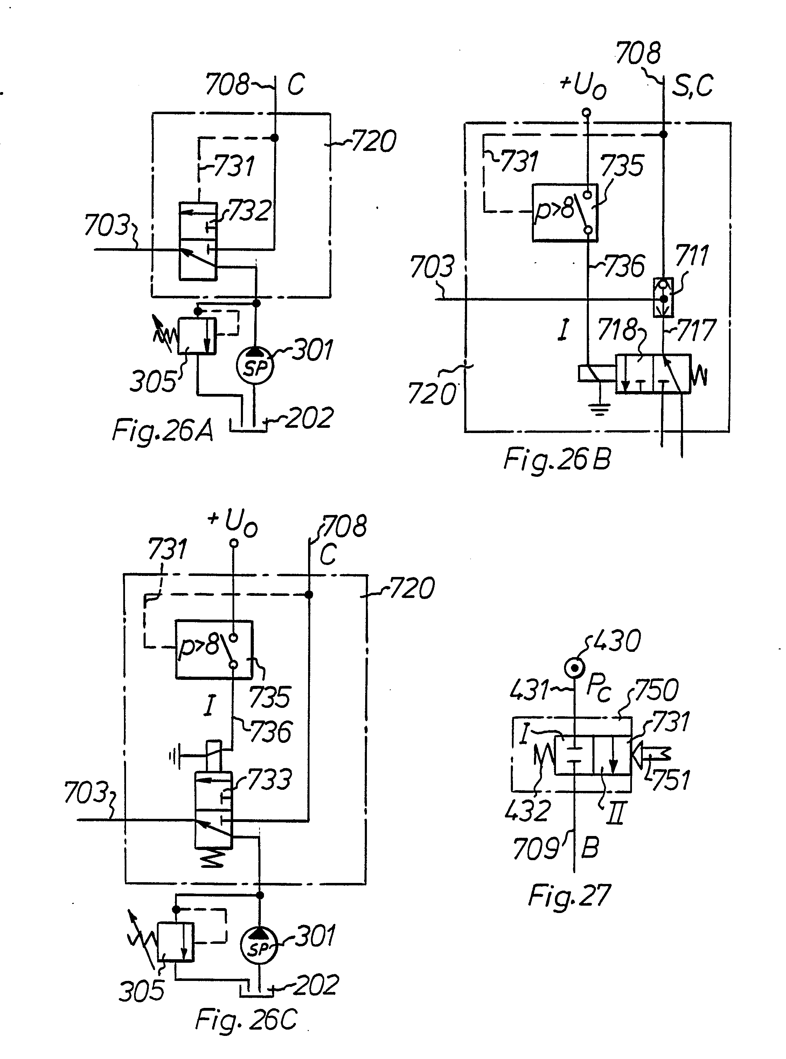

In the use of a pump system 100 provided with a regulator unit 120 where the beginning of its regulating operation can be set by a setting means 701 (e.g. a constant power control pump), further power saving can be achieved by simultaneously activating both setting means 701 and 702 when operating the hydraulic motor 251 (e.g. the slewing motor of an excavator) by the control signal C. The device is exemplified in Fig. 21 where it consists of the device according to Fig. 20 with the control line 704 of the setting means 701 connected to the control line 703. The same result is obtained in the device according to Fig. 19 if the control line 709 in Fig. 21 is excluded. To illustrate in this specification that the device according to the invention is concerned with the setting in the pump system 100 of both the pressure control level and the beginning of the power control or, alternatively, only with the setting of the pressure control level, the (signal) line 704 is indicated by a dashed line. The device according to Fig. 12 with alternative, simultaneous setting of the beginning of the power control is illustrated in Fig. 22. One or both of the setting means 701 and 702 are here supplied with a control signal C, e.g. the control pressure signal $p_{servo}$, via the signal paths (lines) 703 and 704. In the device according to Fig. 22, the line 704 has been connected to the line 703, but each of the lines 703 and 704 may alternatively be connected to the control system 300. Using separate lines from the control system 300 is necessary if the setting means 701, 702 for their function require different types of signals (electric, hydraulic or manual signals). Fig. 23 shows an alternative embodiment of the device in Fig. 21. The device in Fig. 23 consists of the device according to Fig. 21 in which the signal path (line) 709, instead of being connected to the remote control system 400, is connected to a manually activable shifting unit 750. In the device according to Fig. 23, the shifting unit 750 is illustrated by an electric switch connected to an electric power source $U_o$ (alternatively $-U_o$). By means of the shifting unit 750, a shifting signal B is applied to the switching unit 720 via a line 709, whereby the switching unit 720 emits or ceases to emit, by a line shown in the Figure, a (power) signal D for changing the beginning of the power control of the pump system 100 and/or the level of the pressure control from a higher to a lower level or, alternatively, from a lower to a higher level. If the shifting unit 750 in Fig. 23 is provided on a manual control means, e.g. a control lever 320, the device can be described with reference to Fig. 21. Alternatively, the shifting unit 750 may consist of the device shown in Fig. 27 where the shifting unit 750 consists of a pressure medium valve 739 which is manaully operable (indicated by arrow 751) directly or indirectly via the wire cable and/or linkage system and which when actuated connects the line 709, via the line 431, to a pressure medium source 430, e.g. a servo pump. Moreover, the unit 750 may of course instead consist of a manually operable lever the wire cable and/or linkage system of which corresponds to the line 709 shown in Fig. 23. In Fig. 27, the valve 739 in the unit 750 may of course alternatively consist of a valve function where symbols I and II have changed places (the supply of pressure medium from the pressure source to the line 701 ceases upon actuation of the valve 739), or where the spring 432 and the arrow 751 change places. Which type of shifting unit 750, electric, mechanical or pneumatic/hydraulic, or which alternative of the specific type is used of course depends on the signal B required for the switching unit 720.

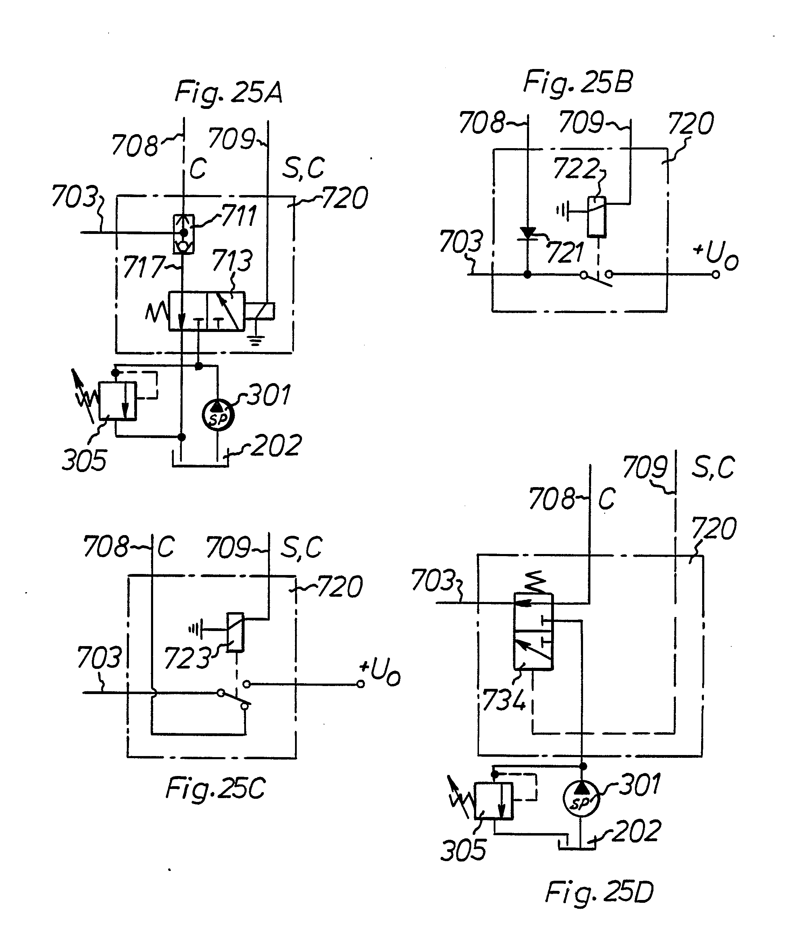

Alternative embodiments of the switching unit 720 for use in the devices shown in Figs. 20, 21, 23, 24 and 28 appear from Fig. 25. (In the device according to Fig. 20, which is provided with a hydraulic pilot control line 709, it is of course possible to use only the device according to Fig. 25 D). The device in Fig. 25 A consists of the switching unit 720 in Fig. 20 with the hydraulically controlled valve 712 with the associated pressure medium control line 709 replaced by an electromagnetically controlled valve 713 with the associated electric control line 709. In Fig. 25 B, the switching unit 720 consists of an electric switch relay 722 which, in the presence of an electric signal in the line 709, connects the line 703 to an electric voltage source $U_o$, and a rectifier 721, e.g. a diode, connected in the line 708. It is here assumed that the voltage source produces a current intensity in the line 703 which is at least equal to the maximum current intensity obtained in the line 708. The switching unit in Fig. 25 C consists of an electric switch relay 723 which, in the presence of an electric signal in the line 709, switches the line 703 from connection to the line 708, to connection to an electric voltage source. Here, the lines 703, 708 and the voltage source $U_o$ may alternatively be connected to the relay 723, such that the line 703 is connected to the voltage source $U_o$ in the absence of an electric signal (zero signal) in the line 709, and such that the line 703 is connected to the line 708 in the presence of an electric signal in the line 709. The device in Fig. 25 D, as to its function, corresponds to the switching unit 720 in Fig. 20. Here, the line 709 consists of a hydraulic pilot control line. Alternatively, the valve 734 in the device of Fig. 25 D may consist of a corresponding solenoid valve and the line 709 of an electric line. Further alternative embodiments of the switching unit 720 appear from Fig. 26. The device in Fig. 26 A, as to its function, corresponds to the switching unit 720 in Fig. 19. The device in Fig. 26 B consists of the switching unit 720 in Fig.

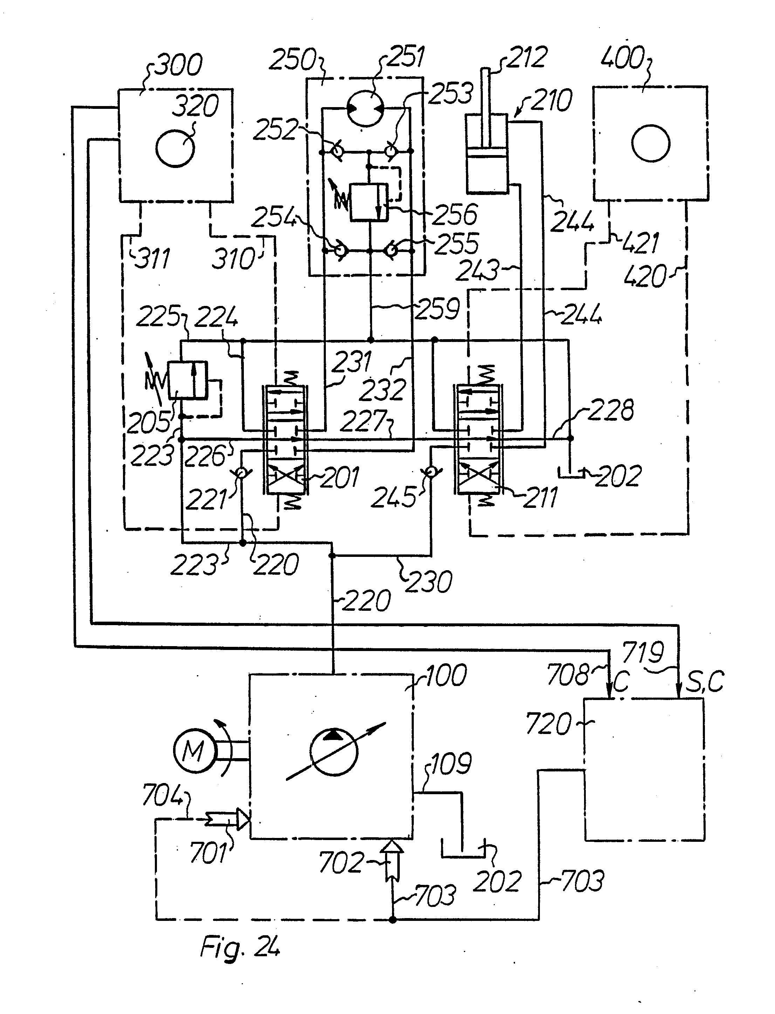

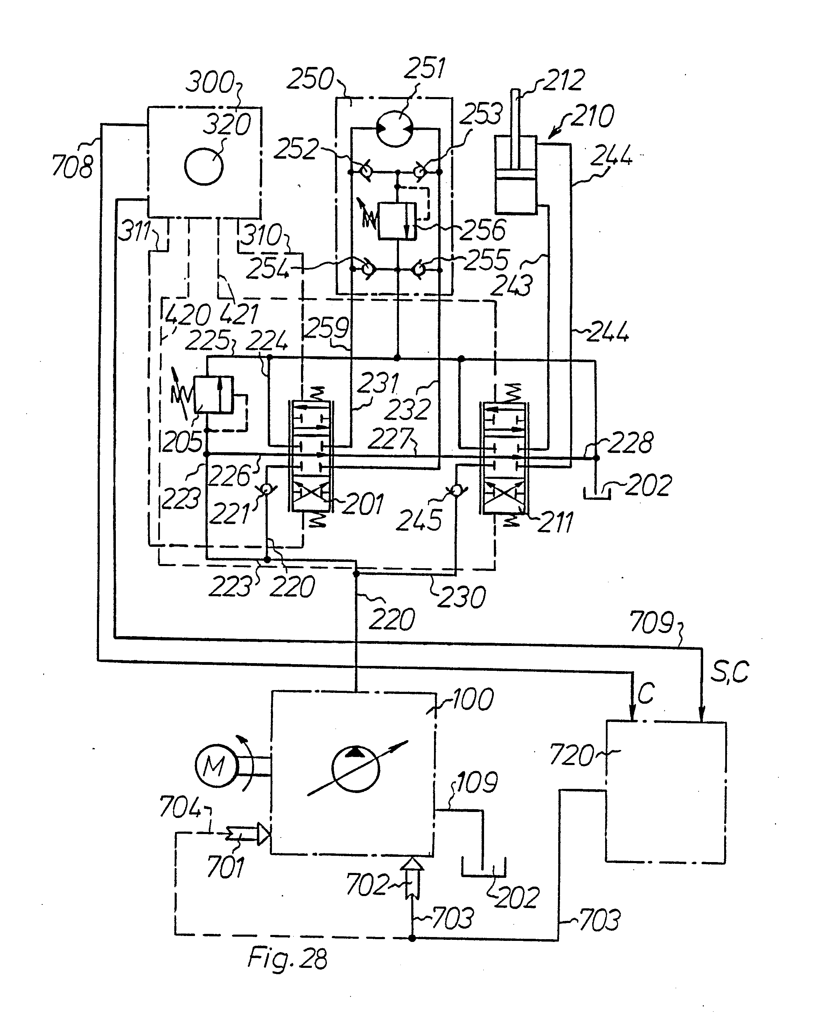

19 with the valve 714 replaced by an solenoid valve 718 and the control line 716 excluded, and a pressure switch coupled to the line 708 and connected to both a voltage source $U_o$ and the solenoid valve 718 by a line 736. The pressure switch 735 then is so set, at a certain pressure in the line 708, e.g. about 8 bar, as to connect the voltage source $U_o$ to the solenoid valve 718. The device in Fig. 26 C, as to its function, corresponds to the device of Fig. 26 A. The line 731 and the valve 732 in Fig. 26 A have been replaced in Fig. 26 C by a pressure switch 735 coupled to the hydraulic line 708 and connected to both a voltage source $U_o$ and a solenoid valve 733 by a line 736. The pressure switch 735 here has the same function as in the device according to Fig. 26 B. The switching unit 720 shown in Fig. 26 is especially intended for the embodiments shown in Fig. 19 or Fig. 21, without the line 709. The control line 708 here used issues from the remote control system 300. The line 731 in Fig. 26, instead of being connected directly to the line 708, can be connected to the control system 300 in a manner corresponding to that of the line 708. The signal in the line 731 consists of the same control signal (servo pressure signal) C as in the line 708. The line 736 in Figs. 26 B and 26 C is supplied with current upon actuation by means of the control lever 320 and, instead of being connected directly to the line 708, may be connected to the control system 300 in a manner corresponding to that of the line 708. The signal I in the line 736 here consists of a control information signal S. Any necessary amplification of the signal can be effected either in the remote control system or in the switching unit. Alternatively, two pressure switches 735 can here be connected to each pilot control line 310, 311 in the remote control system 300, and their output lines with the voltage zero or $U_o$ are connected to a common line 736 to the solenoid valve 733 in the switching unit 720. The signal in the line 736 here consists of a control information signal S. Thus, the switching unit 720 in the device of Fig. 19 may alternatively be supplied from the remote control system 300 with both a control signal C and a control information signal S, or only a control signal C. For one case, this is illustrated in Fig. 21 with the line 709 connected to the remote control system 300 instead of the remote control system 400. Instead of connecting the line 709 to the remote control system 400 and assuming that the two control systems 300, 400 are not simultaneously actuated for simultaneous control of both the hydraulic motor 251 and the hydraulic cylinder 210, the same function is achieved if the line 709 is connected to the remote control system 300 so as to obtain a reversed signal in the line 709 in the devices shown in Figs. 25 A, 25 B and 25 C. Thus, these embodiments can also be used for devices as generally illustrated in Fig. 21 with a line 709 connected to the remote control system 300 if the signal in the line 709 consists of the above-mentioned control signal. Thus, if the hydraulic systems shown in Figs. 20 and 21 are used in such a manner that the hydraulic motor 251 and the hydraulic cylinder 210 are not both simultaneously operated, the device according to Figs. 20 and 21 may, if a suitable switching unit is selected, alternatively consist of the device according to Fig. 24. In Fig. 24, the line 719 corresponds to the above-mentioned line 709, but this line now transmits a reversed signal as compared with the above case. It often happens that two working cylinders 210, hydraulic motors or both a hydraulic motor and a working cylinder are operated by a single, common control lever 320. The device illustrated in Fig. 21 here corresponds to the device shown in Fig. 28. If the same function is here desired for the hydraulic cylinder 210 as for the hydraulic motor 251, the line 709 is connected, as compared with the line 708, in a corresponding way, or in alternative ways, to the part of the control system 300 which is used for operating the hydraulic cylinder 210. The device illustrated in Fig. 28 alternatively corresponds, if the (signal) line 709 is excluded, to the device in Fig. 19 and the device in Fig. 21, or the device in Fig. 24 if the signal in the line 709 corresponds to the signal in the line 719. The description of the invention has been made only with reference to one pump system 100, but the use of several pump systems 100 whose separate pump lines 220 are interconnected to a pump line 220 common to the hydraulic working equipment and connected to a common power consumer (motor/cylinder) is also possible. One or both of the setting means of all the pump systems 100 can then be operated as described above by a setting signal D via corresponding lines 703, 704. The lines 703, 704 may alternatively be wholly or partly connected to each other or wholly or partly directly connected to switching unit 720. One or more of the lines 703, 704 may alternatively be interconnected and, via a common line, connected to the switching unit 720 or directly connected by a separate line to the switching unit 720. The setting means 701, 702 of all the pump systems 100 need of course not be actuated, but optimum energy saving is achieved if all the pump systems 100 are actuated.

It is of course self-evident that the setting means 701, 702 of each pump system 100, by different or various, common signal lines, can be directly or indirectly connected to the switching unit 720. Using separate signal lines from the switching unit 720 is necessary if the setting means 701, 702 for their function require different signal types. By signal type is here meant e.g. electric, pneumatic, hydraulic or manual signals. Whether any signal line branching is performed for the same type of signal in or after the switching unit 720 is indifferent.

In the majority of the described embodiments of the invention, the control information signals S, S' and S" are emitted (received) directly from the respective control system, but these signals may also wholly or partly be indirectly received from sensors detecting the spool movement of a main valve. Although the main valve is here not included in the remote control systems proper but in the hydraulic working system, such a received signal is here considered equivalent to a corresponding control information signal in the associated control system. The pilot control lines, illustrated by dashed lines in the drawings, from each remote control system 300, 400 to the intended main valves are drawn, for greater clarity, outside the illustrated system boundary of the respective remote control system, but these pilot control lines are part of (belong to) the respective remote control system. The same applies to the corresponding, alternatively used mechanical remote control system or systems 500. In the embodiments of the invention as described above, the remote control systems 300, 400 have been used, but this also applies to alternatively corresponding mechanical remote control system or systems 500, the pilot control lines 310, 311 or 310, 311, 312, 313 indicated by dashed lines in the Figures consist of wire cable and/or linkage systems 511 or 511, 513 (the junctions (branching points) of the illustrated control lines here consist of corresponding mechanical branching devices).

When using an electric control lever unit 330, the information signal S used in the invention can also be obtained by the lever signal $S_a$ applied to an electric control circuit for connecting or disconnecting a voltage source ($U_o$) whose switching function and use correspond to the shifting unit 750 shown in Fig. 23. One example of such an electric control circuit is a Schmitt trigger unit or an electric control circuit using the threshold voltage of an electronic component (e.g. a Zener diode). In this case, the information signal is equivalent to the shifting signal B.

## Claims

1. A method for controlling the settable pressure control level ($p_2$) or, alternatively, both the beginning of the power control ($p_1$) and the pressure control level ($p_2$) of a hydraulic pump system (100) included in the hydraulic working system (200) of a construction machine, especially an excavator, and comprising for example a variable-displacement pump or pumps provided with only a constant pressure control or a combined constant power and constant pressure control, **characterized** in that the pressure control level ($p_2$) and the beginning of the power control ($p_1$) or only the pressure control level ($p_2$) of the pump system or systems (100) are acted on upon actuation of a remote control system (300, 400, 500) for a hydraulic motor (251) or several hydraulic motors included in the hydraulic working system (200) and using a common pump flow.

2. Method for controlling the settable pressure control level ($p_2$) or, alternatively, both the beginning of the power control ($p_1$) and the pressure control level ($p_2$) of a hydraulic pump system (100) included in the hydraulic working system (200) of a construction machine, especially an excavator, and comprising for example a variable-displacement pump or pumps provided with only a constant pressure control or a combined constant power and constant pressure control, said pump system (100), alone or conjointly with several pump systems (100), supplying a pressure oil flow to at least one hydraulic motor (251) and at least one hydraulic cylinder (210) of said hydraulic working system (200), **characterized** in that the pressure control level ($p_2$) and the beginning of the power control ($p_1$) or only the pressure control level ($p_2$) of the pump system or systems (100) when operated by a remote control system (300) for a hydraulic motor or several hydraulic motors included in said hydraulic working system (200) and using a common pump flow, are caused when acted on by said remote control system (300, 400, 500) for the hydraulic motor (251) or hydraulic motors, to vary directly or after switching from a high to a low level, from a minimum level ($p_{1\,min}$, $p_{2\,min}$) to a maximum level ($p_{1\,max}$, $p_{2\,max}$) level or, alternatively, are caused when acted on by the remote control system (300) for the hydraulic motor (251) or hydraulic motors to vary directly from a minimum to a maximum level and be switched to a highest constant level when operating the hydraulic cylinder (210) by means of the remote control system (400) of the hydraulic cylinder (210).

3. Method as claimed in claim 1 or 2, **characterized** in that the control signal, for instance pilot pressure signal $p_{servo}$, of the remote control system (300) of the hydraulic motor (251) or hydraulic motors, is used for acting on the setting of both the pressure control level and the beginning of the power control or only the pressure control level for one or more of the pump system or systems (100) whose common pump flow upon actuation by means of the remote control system (300) is supplied to one or more hydraulic motors.

4. Method as claimed in claim 2, **characterized** in that the control signal C or control information signal S of the remote control system (400) of the working cylinder or the remote control system (300) of the hydraulic motor (251) or hydraulic motors or manual switching signal B is used for switching the beginning of the power control ($p_1$) and/or the level of the pressure control ($p_2$) from a higher to a lower level.

5. Method as claimed in claim 3, **characterized** in that the setting of the pressure control level ($p_2$) and the beginning of the power control ($p_1$) is brought about by setting means (701, 702) supplied with the control signal C.

6. Device for controlling the settable pressure control level ($p_2$) or, alternatively, both the beginning of the power control ($p_1$) and the pressure control level ($p_2$) of a hydraulic pump system (100) included in the hydraulic working system (200) of a construction machine, especially an excavator, and comprising for example a variable-displacement pump or pumps provided with only a constant pressure control or a combined constant power and constant pressure control, said pump system (100), alone or conjointly with several pump systems (100), supplying a pressure oil flow to at least one hydraulic motor (251) in the hydraulic working system (200), in which the change of the pressure control level or the beginning of the power control of the pump system (100) is brought about by setting means (701, 702), **characterized** in that both the setting means (701) for setting the beginning of the power control ($p_2$) and the setting means (702) for setting the pressure control level ($p_2$), or only the setting means (702) for setting the pressure control level, are/is supplied with a control signal/signals C from the remote control system (300) for operating the hydraulic motor or motors.

7. Device for controlling the settable pressure control level ($p_2$) or, alternatively, both the beginning of the power control ($p_1$) and the pressure control level ($p_2$) of a hydraulic pump system (100) included in the hydraulic working system (200) of a construction machine, especially an excavator, and comprising for example a variable-displacement pump or pumps provided with only a constant pressure control or a combined constant power and constant pressure control, said pump system (100), alone or conjointly with several pump systems (100), supplying a pressure oil flow to at least one hydraulic motor (251) and at least one hydraulic cylinder (210) in the hydraulic working system (200), in which the change of the pressure control level or the beginning of the power control of the pump system (100) is brought about by setting means (701, 702) and a switching unit (720), **characterized** in that the switching unit (720) is supplied with both a pilot pressure signal $p_{servo}$ or a

corresponding control information signal S from the remote control system (300) for the hydraulic motor or motors, and a pilot pressure signal $p_{servo}$ or a corresponding control information signal S from the remote control system (400) for the working cylinder or cylinders (210), or a manually triggered shifting signal B, and that the switching unit (720) actuates both the setting means (701) for setting the beginning of the power control and the setting means (702) for setting the pressure control level, or only the setting means (702) for setting the pressure control level.

8. Device as claimed in claim 7, **characterized** in that the switching unit (720) comprises an electric control unit, e.g. a microcomputer unit, or an electrohydraulic control unit or a hydraulic control unit.

9. Device as claimed in claim 7, **characterized** in that the switching unit (720) comprises a shuttle valve (711) connected to a line (708) from the remote control system (300) of the hydraulic motor and a signal line (703) by means of which the pump system (100) is operated, together with a line (718) to a valve (712), that the valve (712) when switched by hydraulic pressure in the associated hydraulic line connects pressure medium from the pressure source, e.g. a servo pump (SP), to the line (703) via the shuttle valve (711), and that the valve (712) in the absence of pressure in the control line (709) connects said shuttle valve to the tank, the control line (708) from the remote control system (300) of the hydraulic motor being connected to the line (703) connected to the setting means (701, 702) of the pump system (100).

10. Device as claimed in claim 5, 6, 7 or 9, characterized in that the setting means (701, 702) alternatively comprises a piston and cylinder assembly (241, 242), an electromagnetic unit, a proportional magnet unit, setting means, e.g. a piston and cylinder assembly (241, 242) rotating via a lever the set screw of the pump system (100) for pressure control level setting, or an electric motor with or without gear and/or an amplifier and control unit actuating the set screw of the pump system (100) for power or pressure control level setting.

11. Device as claimed in claim 10, **characterized** in that the electromagnetic unit or the proportional magnet unit comprises an electro-or proportional magnet with or without amplifier unit with associated power source.

Fig.1

**Fig.2**

$p$ [bar]

b

$n$ = constant

a

$P_{1max.}$

$P_{1min.}$

$q_v$ [l/min]

Fig.3

$p$ [bar]

pressure control

$P_{2max.}$

power control
$n$ = constant

$P_{2min.}$

$q_v$ [l/min]

Fig.4

$p$ [bar]

$P_{2max.}$

$n$ = constant

$P_{2min.}$

$q_v$ [l/min]

Fig.5

Fig.6

Fig.7

Fig.8

Fig.9

# Fig.10

$p$   $p_{max}$   $q_v$   $a$   $p$   $q_v$   $b$   $p$   $q_v$   $c$

# Fig.11

$p$   $p_{max.}$   $p_4$   $q_v$   $a$   $p$   $q_v$   $b$   $p$   $q_v$   $c$

Fig.12

Fig.13A

Fig.13B

Fig.14

Fig.15

Fig.16

Fig.17

Fig.18

Fig.19

$C = P_{servo}$

Fig.20

Fig. 21

Fig. 22

0 279 152

Fig. 23

Fig. 24

Fig. 25A

Fig. 25B

Fig. 25C

Fig. 25D

0 279 152

Fig. 26A

Fig. 26 B

Fig. 26C

Fig. 27

Fig. 28

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 650 771 (LINDE AG) 12, November 1970 --- | 1,6 | F 15 B 13/02 F 04 B 49/08 F 16 H 39/46 |
| A | DE-C-3 340 332 (HYDROMATIK GMBH) --- | 1,6 | |
| A | US-A-4 094 144 (STROJARSKE A METALURGICKE ZAVODY) ----- | 1,6 | |

TECHNICAL FIELDS SEARCHED (Int. Cl.4)

F 04 B
F 15 B
F 16 H

The present search report has been drawn up for all claims

| Place of search | Date of completion of the search | Examiner |
|---|---|---|
| STOCKHOLM | 21-03-1988 | LÖFSTEDT J. |